# EUROPEAN PATENT APPLICATION

(11) **EP 2 587 797 A1**
(43) Date of publication of application: **01.05.2013**
(21) Application number: 11008514.9
(22) Date of filing: 24.10.2011
(51) Int. Cl.: H04N 5/46, H04N 5/50, H04N 21/426, H04N 21/438

(54) **Channel scan apparatus and channel scan method for co-scanning different television signals in selected radio frequency channel**

(71) Applicant: MediaTek Inc., Science-Based Industrial Park Hsin-chu City, Taiwan (CN)
(72) Inventor: Maa, Ching-Shyang, Tainan City Taiwan (TW); Lin, Chih-Hsiu, Jiaoxi Township Yilan County (TW)
(74) Representative: Görz, Ingo

(57) **Abstract**

A channel scan apparatus (100, 300, 500, 1 200) includes a first acquisition circuit (102, 302, 502, 1202), a second acquisition circuit (104, 304, 504, 1204), and a controller (106, 306, 506, 1206). The first acquisition circuit (102, 302, 502, 1202) is arranged for checking, during a first time period, whether a selected radio frequency channel has a television signal complying with a first television standard. The second acquisition circuit (104, 304, 504, 1204) is arranged for checking, during a second time period overlapping the first time period, whether a selected radio frequency channel has a television signal complying with a second television standard different from the first television standard. The controller (106, 306, 506, 1206) is arranged for controlling the first acquisition circuit (102, 302, 502, 1 202) and the second acquisition circuit (104, 304, 504, 1 204) to scan a plurality of radio frequency channels.

## Description

The present invention relates to a channel scan apparatus and a channel scan method for co-scanning different television signals (e.g., a DVB-T signal and a DVB-T2 signal) in a selected radio frequency channel according to pre-characterizing clauses of claims 1 and 8.

Digital broadcasting has many advantages over the old, analog broadcasting that is still in use today. For example, the advantages may include efficient usage of radio frequency spectrum, better sound and picture quality, possibility of additional services, etc. There are many standards for digital video broadcasting, the DVB-T (Digital Video Broadcasting - Terrestrial) standard has become the most popular digital terrestrial television standard.

However, to make intensive use of the frequency capacity, the DVB Project has developed the DVB-T2 (Digital Video Broadcasting - Second Generation Terrestrial) standard that provides a minimum increase in capacity of at least 30% in an equivalent reception condition when compared to the DVB-T standard. As either of the DVB-T2 signal and the DVB-T signal may be broadcasted via the same frequency band, it is required to distinguish between channels of the DVB-T2 signal and channels of the DVB-T signal. One conventional method adopts a sequential channel scan scheme. That is, one channel scan operation for the DVB-T signal and another channel scan operation for the DVB-T2 signal are performed separately in the time domain. Unfortunately, such a sequential channel scan method will take much time. Thus, there is a need for an improved channel scan scheme which is capable of rapidly distinguishing between channels of different television standards (e.g., DVB-T2 standard and DVB-T standard) for shortening the total scan time.

This in mind, the present invention aims at providing a channel scan apparatus and a channel scan method for co-scanning different television signals (e.g., a DVB-T signal and a DVB-T2 signal) in a selected radio frequency channel to shorten the total scan time.

This is achieved by a channel scan apparatus and a channel scan method according to claims 1 and 8. The dependent claims pertain to corresponding further developments and improvements.

As will be seen more clearly from the detailed description following below, the claimed channel scan apparatus includes a first acquisition circuit, a second acquisition circuit, and a controller. The first acquisition circuit is arranged for checking, during a first time period, whether a selected radio frequency (RF) channel has a television signal complying with a first television standard. The second acquisition circuit is arranged for checking, during a second time period overlapping the first time period, whether a selected RF channel has a television signal complying with a second television standard different from the first television standard. The controller is arranged for controlling the first acquisition circuit and the second acquisition circuit to scan a plurality of RF channels.

The claimed channel scan method includes following steps: during a first time period, performing a first acquisition operation to check whether a selected radio frequency (RF) channel has a television signal complying with a first television standard; during a second time period overlapping the first time period, performing a second acquisition operation to check whether a selected RF channel has a television signal complying with a second television standard different from the first television standard; and controlling the first acquisition operation and the second acquisition operation to scan a plurality of RF channels.

In the following, the invention is further illustrated by way of example, taking reference to the accompanying drawings. Thereof
FIG. 1 is a block diagram illustrating a generalized channel scan apparatus according to an exemplary embodiment of the present invention,
FIG. 2 is a diagram illustrating a generalized channel scan method according to an exemplary embodiment of the present invention,
FIG. 3 is a block diagram illustrating another generalized channel scan apparatus according to an exemplary embodiment of the present invention,
FIG. 4 is a diagram illustrating another generalized channel scan method according to an exemplary embodiment of the present invention,
FIG. 5 is a diagram illustrating one exemplary implementation of the channel scan apparatus shown in FIG. 1,
FIG. 6 is a block diagram illustrating one exemplary implementation of a mode detection unit according to the present invention,
FIG. 7 is a diagram illustrating data symbols contained in a DVB-T signal,
FIG. 8 is a diagram illustrating a P1 symbol having a C-A-B structure,
FIG. 9 is an exemplary implementation of a DVB-T2 signal detection unit according to the present invention,
FIG. 10 is a block diagram illustrating a DVB-T2 spectrum inversion detection apparatus,
FIG. 11 is a diagram illustrating a comparison between a sequential channel scan scheme and a channel co-scan scheme, and
FIG. 12 is a diagram illustrating one exemplary implementation of the channel scan apparatus shown in FIG. 3.

Certain terms are used throughout the description and following claims to refer to particular components. As one skilled in the art will appreciate, manufacturers may refer to a component by different names. This document does not intend to distinguish between components that differ in name but not function. In the following description and in the claims, the terms "include" and "comprise" are used in an open-ended fashion, and thus should be interpreted to mean "include, but not limited to ...". Also, the term "couple" is intended to mean either an indirect or direct electrical connection. Accordingly, if one device is electrically connected to another device, that connection may be through a direct electrical connection, or through an indirect electrical connection via other devices and connections.

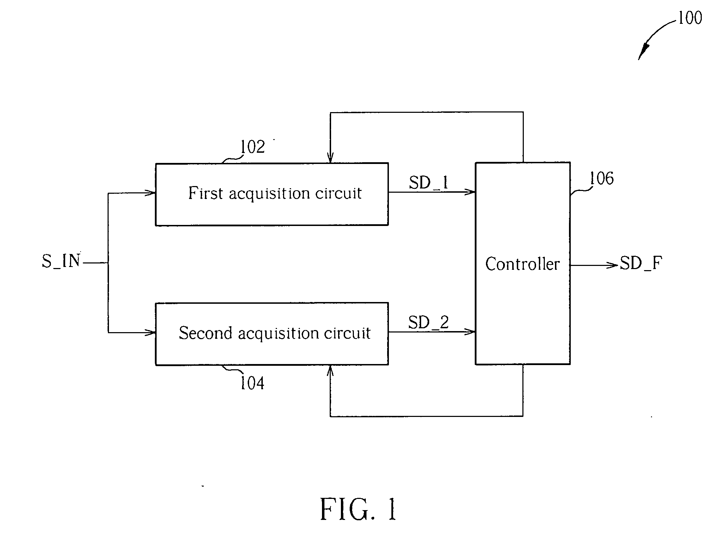

Please refer to FIG. 1, which is a block diagram illustrating a generalized channel scan apparatus according to an exemplary embodiment of the present invention. The exemplary channel scan apparatus 100 includes, but is not limited to, a first acquisition circuit 102, a second acquisition circuit 104, and a controller 106. The first acquisition circuit 102 is arranged for checking, during a first time period, whether a selected radio frequency (RF) channel has a television signal complying with a first television standard. The second acquisition circuit is arranged for checking, during a second time period overlapping the first time period, whether the same selected RF channel has a television signal complying with a second television standard different from the first television standard. As shown in FIG. 1, an input signal S_IN derived from the same selected RF channel is fed into both of the first acquisition circuit 102 and the second acquisition circuit 104. In one exemplary design, upon receiving the input signal S_IN corresponding to the selected RF channel to be scanned, the first acquisition circuit 102 starts a first acquisition operation performed upon the input signal S_IN for checking the existence of a television signal complying with the first television standard, and the second acquisition circuit 104 starts a second acquisition operation performed upon the input signal S_IN for checking the existence of a television signal complying with the second television standard. To put it simply, a channel co-scan scheme is employed by the channel scan apparatus 100 since both of the first acquisition circuit 102 and the second acquisition circuit 102 may be active during an overlapped time period.

The first acquisition circuit 102 generates a first acquisition indicator SD_1 to the controller 106, where the first acquisition indicator SD_1 is indicative of the existence of a television signal complying with the first television standard. Similarly, the second acquisition circuit 1 04 generates a second acquisition indicator SD_2 to the controller 106, where the second acquisition indicator SD_2 is indicative of the existence of a television signal complying with the second television standard. Based on the information provided by the first acquisition indicator SD_1 and the second acquisition indicator SD_2, the controller 106 generates a final acquisition indicator SD_F to indicate the actual status of the scanned RF channel. For example, when the first acquisition indicator SD_1 indicates that there is a television signal complying with the first television standard, and the second acquisition indicator SD_2 indicates that there is no television signal complying with the second television standard, the controller 106 acknowledges that the scanned RF channel delivers a television signal complying with the first television standard, and accordingly generates the final acquisition indicator SD_F to inform the following signal processing stage. When the first acquisition indicator SD_1 indicates that there is no television signal complying with the first television standard, and the second acquisition indicator SD_2 indicates that there is a television signal complying with the second television standard, the controller 106 acknowledges that the scanned RF channel delivers a television signal complying with the second television standard, and accordingly generates the final acquisition indicator SD_F to inform the following signal processing stage. When the first acquisition indicator SD_1 indicates that there is no television signal complying with the first television standard, and the second acquisition indicator SD_2 indicates that there is no television signal complying with the second television standard, the controller 106 acknowledges that the scanned RF channel doe not deliver a television signal complying with any of the first television standard and the second television standard, and accordingly generates the final acquisition indicator SD_F to inform the following signal processing stage.

In addition to generating the final acquisition indicator SD_F for the currently scanned RF channel, the controller 106 is arranged for controlling the first acquisition circuit 102 and the second acquisition circuit 104 to scan a plurality of RF channels within a desired frequency band. That is, after the channel scan operation for the currently selected RF channel is accomplished, the input signal S_IN may be derived from another selected RF channel which is not scanned by the channel scan apparatus 100 yet. By way of example, but not limitation, the controller 106 may be used to instruct a front-end block (not shown) disposed before the channel scan apparatus 100 to update the input signal S_IN by changing the selected RF channel to a new RF frequency. Besides, the controller 106 controls the first acquisition circuit 102 and the second acquisition circuit 104 to process the input signal S_IN derived from the updated RF channel for checking the existence of a television signal complying with the first television standard and the existence of a television signal complying with the second television standard, respectively.

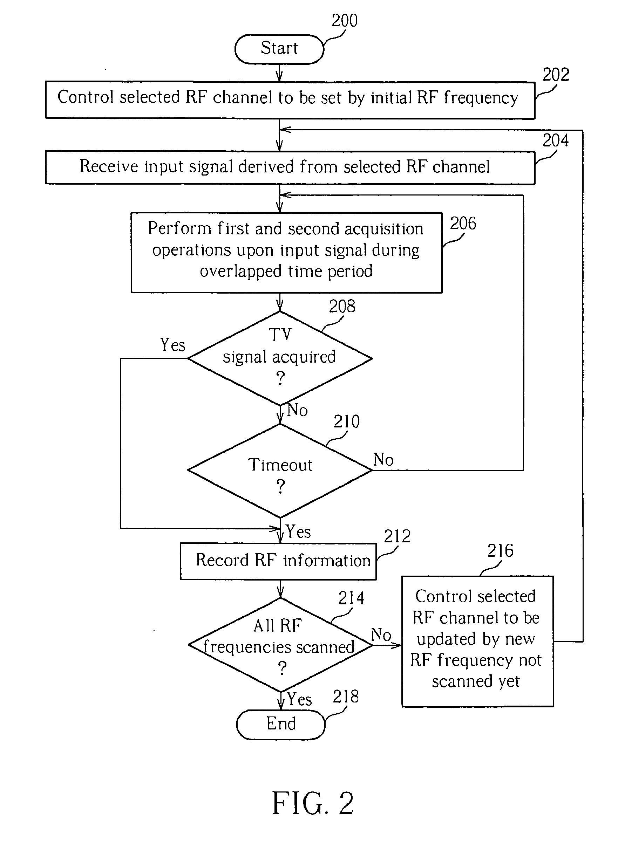

Please refer to FIG. 2, which is a diagram illustrating a generalized channel scan method according to an exemplary embodiment of the present invention. Provided that the result is substantially the same, the steps are not required to be executed in the exact order shown in FIG. 2. The exemplary channel scan method may be employed by the channel scan apparatus 100 shown in FIG. 1, and may be briefly summarized as follows.

### Step 200: Start.

Step 202: Control a selected RF channel to be set by an initial RF frequency.
Step 204: Receive an input signal derived from the selected RF channel, wherein the input signal may be a zero signal or a non-zero signal, depending on whether the selected RF channel is actually used for television signal transmission.
Step 206: Perform a first acquisition operation upon the input signal during a first time period, and perform a second acquisition operation upon the same input signal during a second time period overlapping the first time period.
Step 208: Check if a television signal complying with the first television standard or the second television standard is acquired by one of the first acquisition operation and the second acquisition operation. If yes, go to step 21 2; otherwise, go to step 210.
Step 210: Check if a timeout period is expired. If yes, go to step 21 2; otherwise, go to step 206 to keep monitoring the television signal acquisition.
Step 21 2: Record the RF information (e.g., the status of the selected RF channel set by the current RF frequency).
Step 214: Check if all of the RF frequencies have been scanned. If yes, go to step 21 8; otherwise, go to step 216.
Step 216: Control the selected RF channel to be updated by a new RF frequency that is not scanned yet. Go to step 204.
Step 218: End.

Steps 202, 208, 210, 212, 214, and 216 may be performed by the controller 106. Steps 204 and 206 may be performed by the first acquisition circuit 102 and the second acquisition circuit 104. More specifically, the controller 106 controls the channel scan procedure. Therefore, the selected RF channel will be successively updated by using different RF frequencies until all of the RF frequencies have been scanned (steps 202, 214 and 216). When the selected RF channel is set by one of the RF frequencies to be scanned, the first acquisition circuit 102 and the second acquisition circuit 104 are both active to process the same input signal S_IN derived from the selected RF channel in a channel co-scan manner (steps 204 and 206). When one of the first acquisition circuit 102 and the second acquisition circuit 104 successfully detects the existence of a television signal complying with the first/second television standard before a timeout period is expired (steps 206, 208, and 210), the controller 106 determines that the channel scan operation for the selected RF channel set by a current RF frequency is accomplished, and records the RF information (step 21 2) according to the first acquisition indicator SD_1 and the second acquisition indicator SD_2. Besides, based on the recorded RF information, the controller 1 06 may generate the final acquisition indicator SD_F to indicate that the selected RF channel delivers a television signal complying with the first/second television standard. However, when the selected RF channel has a non-zero signal included therein, and none of the first acquisition circuit 102 and the second acquisition circuit 104 is able to successfully detect the existence of a television signal complying with the first/second television standard before a timeout period is expired (steps 206, 208, and 210), the controller 106 also determines that the channel scan operation for the selected RF channel set by a current RF frequency is accomplished, and records the RF information (e.g., the status of the selected RF channel set by the current RF frequency) to indicate that the selected RF channel does not deliver any television signal complying with the first/second television standard (step 212). Please note that aforementioned timeout period should be properly defined to allow the first acquisition circuit 102 and the second acquisition circuit 104 to have the chance of identifying the television signal complying with the first/second television standard.

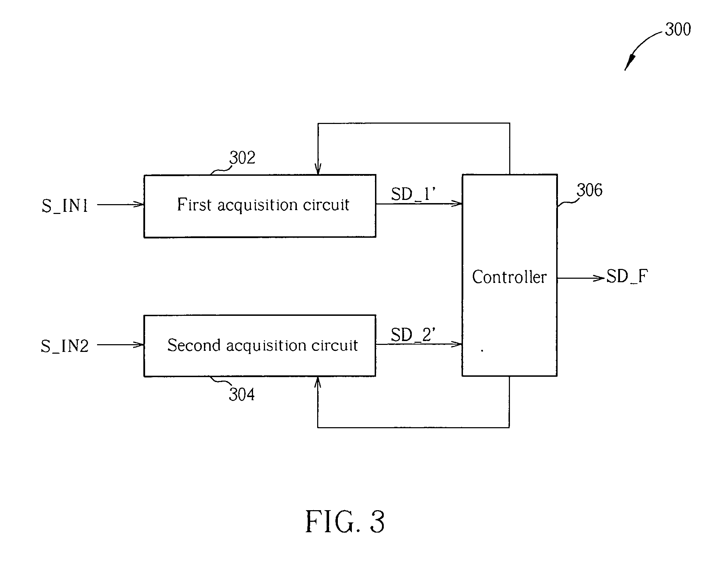

In above exemplary embodiment, the first acquisition circuit 102 and the second acquisition circuit 104 are arranged for processing the input signal S_IN derived from the same selected RF channel. However, this is for illustrative purposes only, and is not meant to be a limitation of the present invention. Please refer to FIG. 3, which is a block diagram illustrating another generalized channel scan apparatus according to an exemplary embodiment of the present invention. The exemplary channel scan apparatus 300 includes, but is not limited to, a first acquisition circuit 302, a second acquisition circuit 304, and a controller 306. The first acquisition circuit 302 is arranged for checking, during a first time period, whether one selected RF channel has a television signal complying with a first television standard. The second acquisition circuit 304 is arranged for checking, during a second time period overlapping the first time period, whether another selected RF channel has a television signal complying with a second television standard different from the first television standard. It should be noted that the selected RF channel checked by the first acquisition circuit 302 is different from the selected RF channel checked by the second acquisition circuit 304. As shown in FIG. 3, a first input signal S_IN1 derived from one selected RF channel is fed into the first acquisition circuit 102, and a second input signal S_IN2 derived from another selected RF channel is fed into the second acquisition circuit 104. For example, a first front-end block (not shown) and a second front-end block (not shown) may be disposed before the channel scan apparatus 300. The first front-end block may include one tuner tuned to a first RF frequency for receiving and providing the first input signal S_IN1, and the second front-end block may include another tuner tuned to a second RF frequency for receiving and providing the second input signal S_IN2, where the first RF frequency is different from the second RF frequency. Similarly, a channel co-scan scheme is employed by the channel scan apparatus 300 since both of the first acquisition circuit 302 and the second acquisition circuit 302 would be active during an overlapped time period.

The first acquisition circuit 302 generates a first acquisition indicator SD_1' to the controller 306 by processing the first input signal S_IN1, where the first acquisition indicator SD_1' is indicative of the existence of a television signal that complies with the first television standard and is delivered via one selected RF channel. Regarding the second acquisition circuit 304, it generates a second acquisition indicator SD_2' to the controller 306 by processing the second input signal S_IN2, where the second acquisition indicator SD_2' is indicative of the existence of a television signal that complies with the second television standard and is delivered via another selected RF channel.

The controller 306 may also be arranged for controlling the first acquisition circuit 302 and the second acquisition circuit 304 to scan a plurality of RF channels. For example, after one channel scan operation performed by the first acquisition circuit 302 for a first selected RF channel is accomplished and another channel scan operation performed by the second acquisition circuit 304 for a second selected RF channel are accomplished, the first input signal S_IN1 may be derived from a different selected RF channel which is not scanned by the first acquisition circuit 302 yet, and the second input signal S_IN2 may be derived from a different selected RF channel which is not scanned by the second acquisition circuit 304 yet. By way of example, but not limitation, the controller 106 may be used to instruct the first front-end block and second front-end block disposed before the channel scan apparatus 300 to update the first input signal S_IN1 by changing the first selected RF channel to an updated RF frequency and update the second input signal S_IN2 by changing the second selected RF channel to an updated RF frequency.

After all of the RF frequencies are checked by the first acquisition circuit 302 and the second acquisition circuit 304, the controller 306 generates a final acquisition indicator SD_F for each scanned RF channel according to the recorded RF information of the scanned RF channel (i.e., the information provided by the first acquisition indicator SD_1' and the second acquisition indicator SD_2' corresponding to the same scanned RF channel). The same objective of checking if a selected RF channel has a television signal complying with the first/second television standard is achieved.

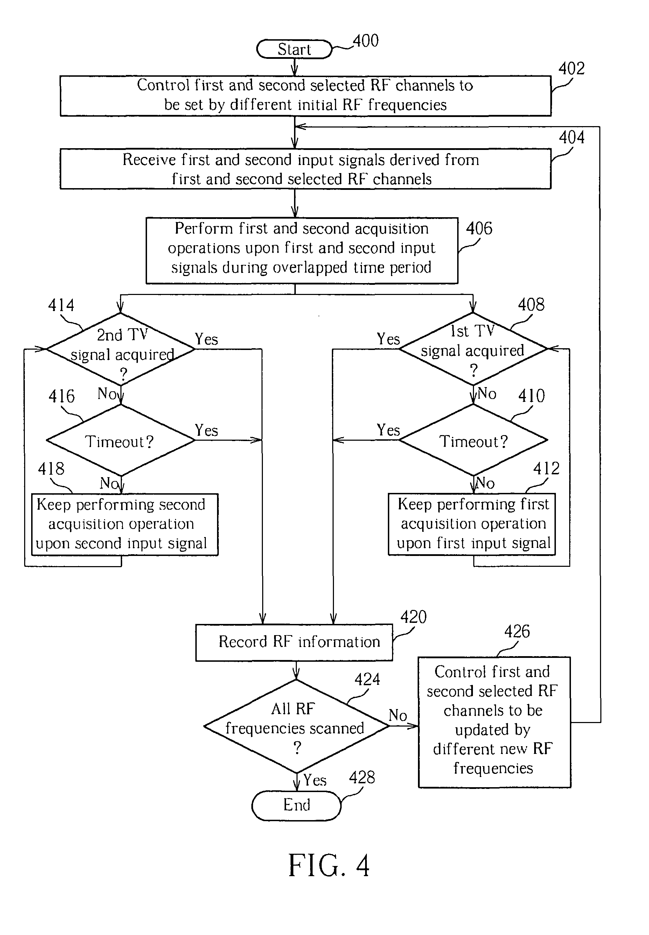

Please refer to FIG. 4, which is a diagram illustrating another generalized channel scan method according to an exemplary embodiment of the present invention. Provided that the result is substantially the same, the steps are not required to be executed in the exact order shown in FIG. 4. The exemplary channel scan method may be employed by the channel scan apparatus 300 shown in FIG. 3, and may be briefly summarized as follows.

### Step 400: Start.

Step 402: Control a first selected RF channel to be set by one initial RF frequency, and control a second selected RF channel to be set by another initial RF frequency, wherein the first selected RF channel is different from the second selected RF channel.
Step 404: Receive a first input signal derived from the first selected RF channel, and receive a second input signal derived from the second selected RF channel, wherein the first input signal may be a zero signal or a non-zero signal, depending on whether the first selected RF channel is actually used for television signal transmission; and the second input signal may be a zero signal or a non-zero signal, depending on whether the second selected RF channel is actually used for television signal transmission.
Step 406: Perform a first acquisition operation upon the first input signal during a first time period, and perform a second acquisition operation upon the second input signal during a second time period overlapping the first time period.
Step 408: Check if a television signal complying with the first television standard is acquired by the first acquisition operation. If yes, go to step 420; otherwise, go to step 410.
Step 41 0: Check if a timeout period is expired. If yes, go to step 420; otherwise, go to step 412.
Step 41 2: Keep performing the first acquisition operation upon the first input signal. Go to step 408.
Step 41 4: Check if a television signal complying with the second television standard is acquired by the second acquisition operation. If yes, go to step 420; otherwise, go to step 416.
Step 41 6: Check if a timeout period is expired. If yes, go to step 420; otherwise, go to step 41 8.
Step 41 8: Keep performing the second acquisition operation upon the second input signal. Go to step 414.
Step 420: Record the RF information.
Step 424: Check if all of the RF frequencies have been scanned by the first acquisition operation and all of the RF frequencies have been scanned by the second acquisition operation. If yes, go to step 428; otherwise, go to step 426.
Step 426: Control the first selected RF channel to be updated by a new RF frequency that is not scanned yet, and control the second selected RF channel to be updated by a new RF frequency that is not scanned yet, wherein the updated first selected RF channel is different from the updated second selected RF channel. Go to step 404.
Step 428: End.

Steps 402, 408, 41 0, 414, 416, 420, 424, and 426 may be performed by the controller 306. Steps 404 and 406 may be performed by the first acquisition circuit 402 and the second acquisition circuit 404. Step 41 2 may be performed by the first acquisition circuit 402. Step 418 may be performed by the second acquisition circuit 404. It should be noted that, based on the stored RF information (e.g., the status of each scanned RF channel as indicated by a pair of the corresponding first acquisition indicator SD_1' and second acquisition indicator SD_2'), the controller 306 generates a final acquisition indicator SD_F accordingly. As a person skilled in the art can readily understand operations of the steps shown in FIG. 4 after reading above paragraphs, further description is omitted here for brevity.

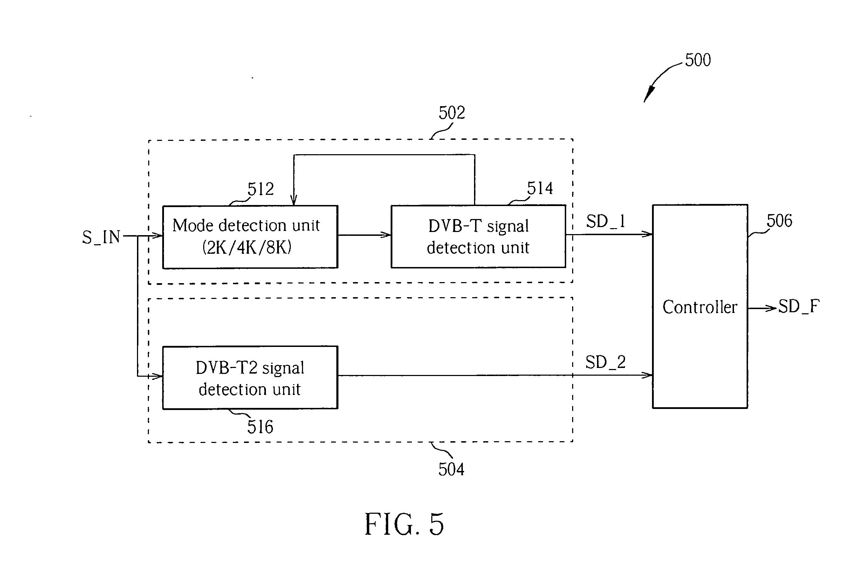

In above exemplary embodiments, the first television standard and the second television standard may be digital television (DTV) standards. By way of example, but not limitation, the first television standard may be a DVB-T standard, and the second television standard may be a DVB-T2 standard. However, this is for illustrative purposes only, and is not meant to be a limitation of the present invention. Please refer to FIG. 5, which is a diagram illustrating one exemplary implementation of the channel scan apparatus 100 shown in FIG. 1. The exemplary channel scan apparatus 500 is based on the architecture shown in FIG. 1, and therefore includes a first acquisition circuit 502 used to realizing the first acquisition circuit 102, a second acquisition circuit 504 used to realize the second acquisition circuit 104, and a controller 506 used to realize the controller 106. In this exemplary implementation, the first acquisition circuit 502 includes a mode detection unit 512 and a DVB-T signal detection unit 514, and the second acquisition circuit 504 includes a DVB-T2 signal detection circuit 516. As the structures of data symbols in DVB-T signal and DVB-T2 signal for 2K/4K/8K Fast Fourier Transform (FFT) mode are the same, the mode detection unit 512 is therefore arranged for detecting if an input signal S_IN of the selected RF channel checked by the first acquisition circuit 502 uses a 2K/4K/8K FFT mode. That is, the mode detection unit 51 2 would detect that the input signal S_IN may be a DVB-T/DVB-T2 signal when an FFT size is found equal to 2K/4K/8K. The DVB-T signal detection unit 514 is arranged for checking continual pilots of a plurality of symbols transmitted by the input signal S_IN when the mode detection unit 51 2 indicates that the input signal S_IN uses the 2K/4K/8K FFT mode, and accordingly determining if the selected RF channel checked by the first acquisition circuit 502 has the television signal complying with the DVB-T standard. In a case where the mode detection unit 512 indicates that the input signal S_IN uses the 2K/4K/8K FFT mode, and the DVB-T signal detection unit 514 does not find that the selected RF channel delivers a television signal complying with the DVB-T standard, it is possible that the input signal S_IN that is actually a DVB-T signal but has errors included therein due to certain factors, thus making the DVB-T signal detection unit 514 fail to successfully identify the transmitted DVB-T signal. Therefore, before a timeout period is expired or the second acquisition circuit 504 successfully detects the existence of the DVB-T2 signal, the DVB-T signal detection unit 514 controls the mode detection unit 512 to keep performing the mode detection for allowing the DVB-T signal detection unit 514 to have the chance of detecting the existence of the DVB-T signal.

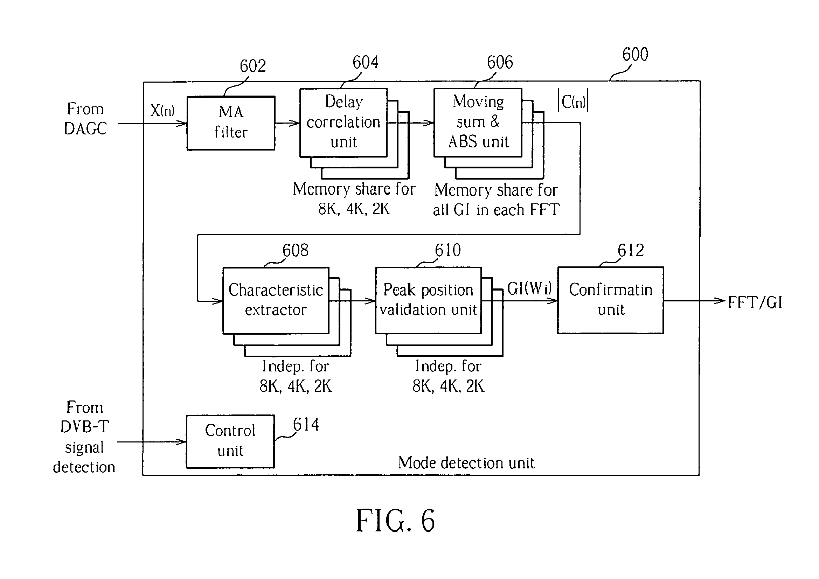

It should be noted that any means capable of identifying the 2K/4K/8K FFT mode may be employed by the mode detection unit 51 2. Please refer to FIG. 6, which is a block diagram illustrating one exemplary implementation of a mode detection unit according to the present invention. The mode detection unit 512 may be realized by the mode detection unit 600. As shown in FIG. 6, the mode detection unit 600 employs a time-domain guard interval (GI) detection to identify the FFT mode. Therefore, the mode detection unit 600 is configured to have a moving average (MA) filter 602, a plurality of delay correlation units 604, a plurality of moving sum & absolute value (ABS) units 606, a plurality of characteristic extractors 608, a plurality of peak position validation unit 610, a confirmation unit 61 2, and a control unit 614. As shown in FIG. 6, an output of the digital automatic gain control (DAGC) is fed into the MA filter 602, and a control signal generated from the DVB-T signal detection unit 514 is fed into the control unit 614. The control unit 614 therefore stops or continues the mode detection operation performed upon the input received by the MA filter 602 according to the control signal. With the use of delay correlation, moving sum, characteristic extraction, and peak position validation, the guard interval as well as the corresponding FFT mode can be identified. As a person skilled in the pertinent art can readily understand details of elements included in the proposed mode detection unit 600 shown in FIG. 6, further description is omitted here for brevity.

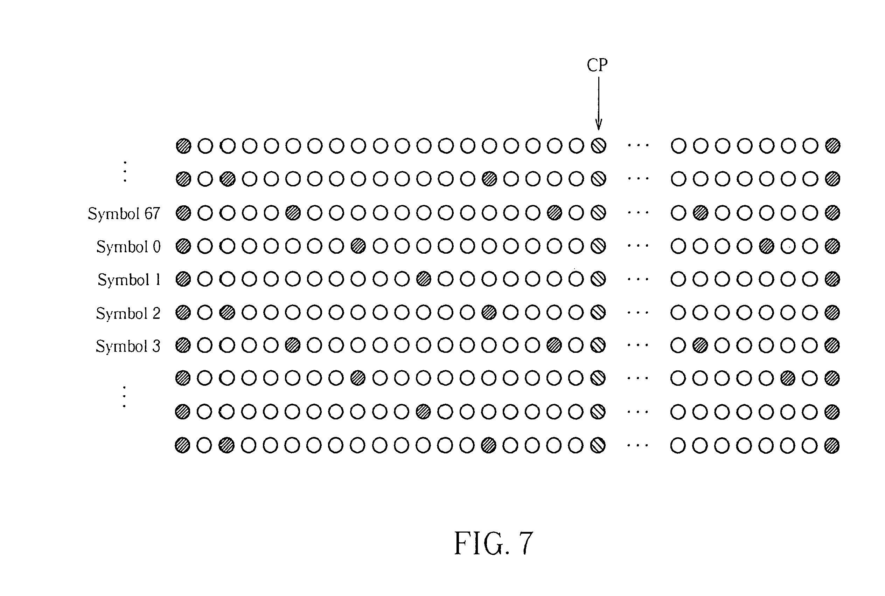

In accordance with the DVB-T standard, the DVB-T signal only contains data symbols, where each of the data symbols has the same continual pilot (CP) located at a fixed position, as shown in FIG. 7. The DVB-T signal detection unit 514 may be arranged to correlate the expected continual pilots located at the fixed position for identifying the DVB-T signal. More specifically, no matter whether the spectrum is inverted or not, the DVB-T signal detection unit 514 calculates one correlation sum value between two consecutive symbols on the known CP position, and then compares the maximum peak correlation sum value and the second maximum peak correlation sum value to check if the difference therebetween exceeds a predetermined threshold (e.g., 3dB). When the difference exceeds the predetermined threshold, implying that the input signal S_IN does have expected continual pilots located at the same position of different symbols, the DVB-T signal detection unit 514 may generate the first acquisition indicator SD_1 to indicate that the input signal S_IN is a DVB-T signal. Otherwise, the DVB-T signal detection unit 514 may generate the first acquisition indicator SD_1 to indicate that the input signal S_IN is not a DVB-T signal.

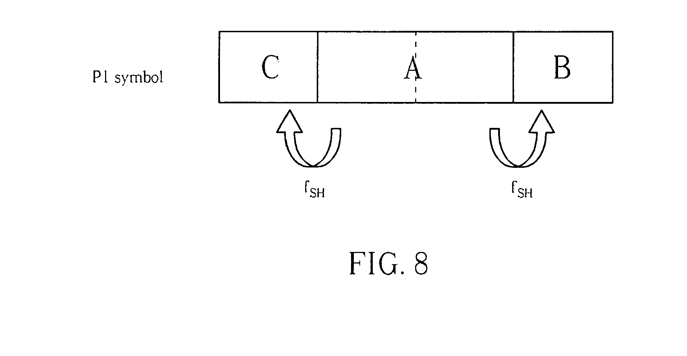

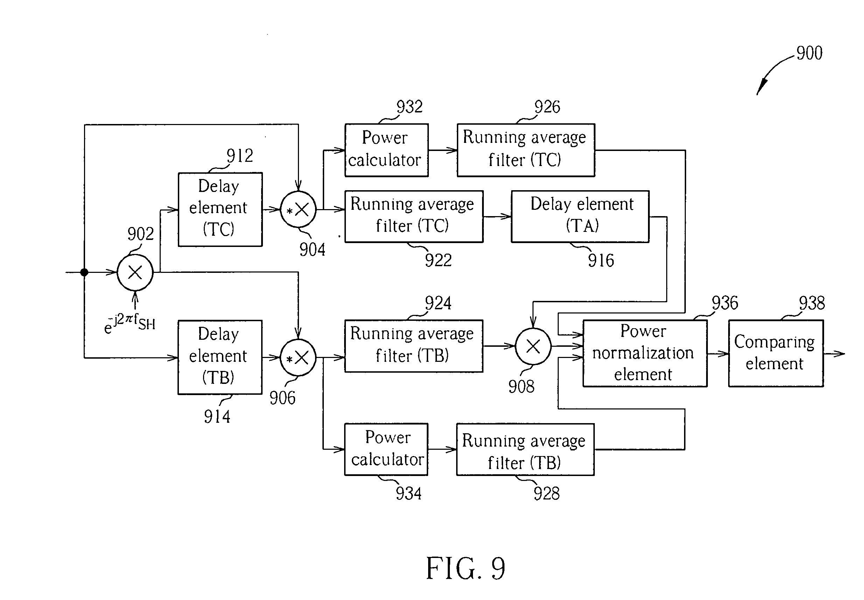

The DVB-T2 signal detection unit 516 may exploit the P1 symbol as defined in the DVB-T2 standard to easily and rapidly determine if the input signal S_IN is a DVB-T2 signal. In other words, the DVB-T2 signal detection unit 51 6 is arranged for checking a P1 symbol to determine if the selected RF channel checked by the second acquisition circuit 504 has the television signal complying with the DVB-T2 standard. FIG. 8 is a diagram illustrating a P1 symbol having a C-A-B structure. The P1 symbol P1 occurs once per frame, and is inserted at the very beginning of each frame. The P1 symbol is a 1 K Orthogonal Frequency-Division Multiplexing (OFDM) symbol with two "guard-interval-like" portions added. Specifically, the P1 symbol has three parts C, A and B, wherein part C is derived from a first portion of part A by frequency shift f_{SH} (i.e., part C is a frequency-shifted copy of the first 542 samples of part A), and part B is derived from a second portion of part A by frequency shift f_{SH} (i.e., part B is a frequency-shifted copy of the last 482 samples of part A). Therefore, the DVB-T2 signal detection unit 516 may correlate the C-A part and A-B part to identify the DVB-T2 signal. Please refer to FIG. 9, which is an exemplary implementation of a DVB-T2 signal detection unit according to the present invention. The DVB-T2 signal detection unit 516 may be realized by the DVB-T2 signal detection unit 900. As shown in FIG. 9, the DVB-T2 signal detection unit 900 includes a down-shifter 902, a plurality of complex multipliers 904, 906, a multiplier 908, a plurality of delay elements 912, 914, 916, a plurality of running average filters 922, 924, 926, 928, a plurality of power calculators 932, 934, a power normalization element 936, and a comparing element 938. TA, TB, and TC correspond to 1024, 482, and 542 samples (i.e., lengths of the parts A, B, and C of the P1 symbol), respectively. A delay element 91 2/914 together with an associated multiplier 904/906 and running average filter 922/924 form a correlator which detects the frequency-shifted repetition (i.e., part C/B). The delay element 916 makes the correlator outputs line up in time. The power normalization element 936 normalizes a power value generated from the multiplier 908, a power value derived from the combination of the power calculator 932 and running average filter 926, and a power value derived from the combination of the power calculator 934 and running average filter 928. The comparing element 938 finds a maximum power value to get the P1 symbol bound and estimates the frequency offset according to outputs of the power normalization element 936.

It should be noted that using the P1 symbol to detect the existence of the DVB-T2 signal is for illustrative purposes only, and is not meant to be a limitation of the present invention. That is, configuring the DVB-T2 signal detection unit 516 to employ other means for detecting the existence of the DVB-T2 signal is also feasible. For example, in an alternative design, a more complicated solution using continual pilots to check the existence of the DVB-T2 signal may be employed by the DVB-T2 signal detection unit 516.

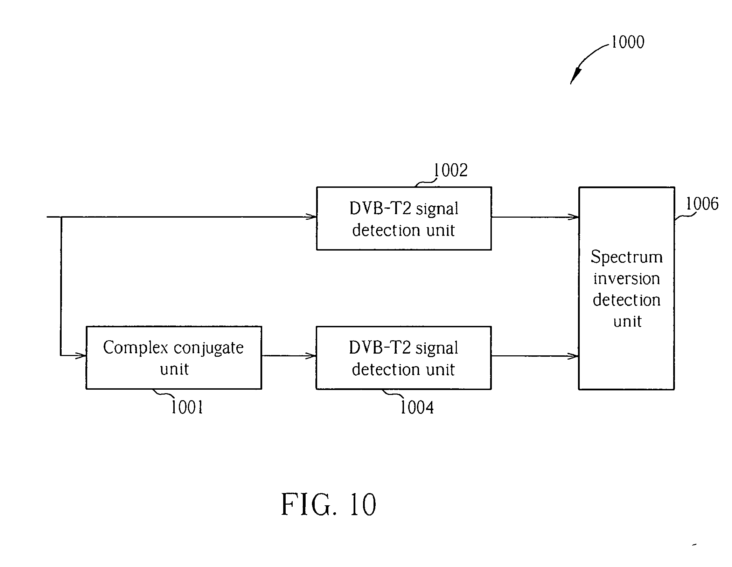

The DVB-T2 signal detection unit 900 shown in FIG. 9 may also be part of a DVB-T2 spectrum inversion detection apparatus. Please refer to FIG. 10, which is a block diagram illustrating a DVB-T2 spectrum inversion detection apparatus 1000. The DVB-T2 spectrum inversion detection apparatus 1000 includes a complex conjugate unit 1001 , a plurality of DVB-T2 signal detection units 1002, 1004, and a spectrum inversion detection unit 1006, wherein each of the DVB-T2 signal detection units 1002 and 1004 may be realized by the DVB-T2 signal detection unit 900 shown in FIG. 9. As shown in FIG. 10, an input of the DVB-T2 signal detection unit 1004 is a complex conjugate of an input of the DVB-T2 signal detection unit 1002. The spectrum inversion detection unit 1006 detects if the DVB-T2 spectrum is inverted according to outputs of the DVB-T2 signal detection units 1002 and 1004.

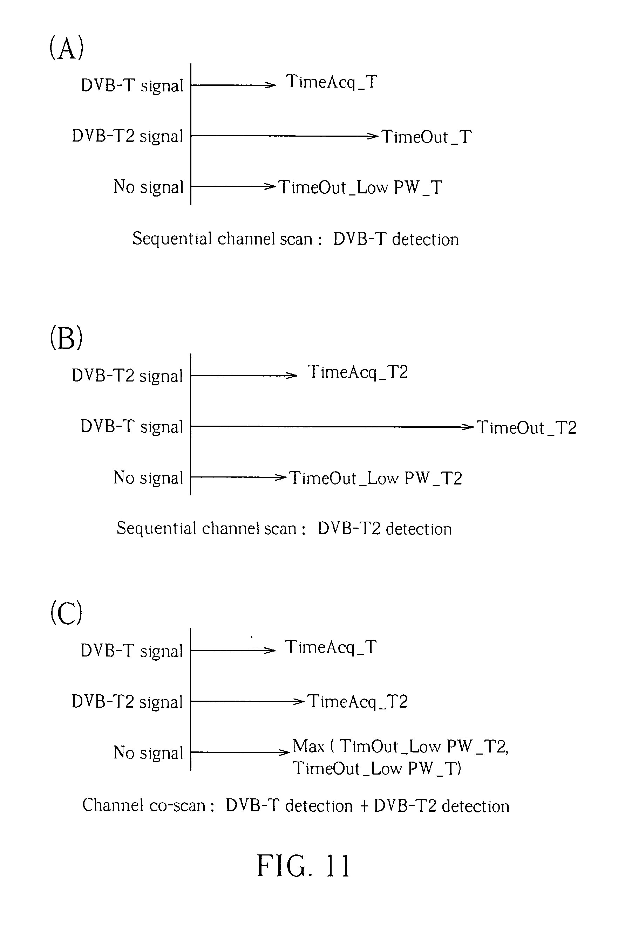

The proposed channel co-scan scheme employed by the channel scan apparatus 500 shown in FIG. 5 is capable of reducing the total channel scan time greatly. Please refer to FIG. 11, which is a diagram illustrating a comparison between a sequential channel scan scheme and a channel co-scan scheme. As mentioned above, the sequential channel scan scheme is configured to check the existence of the DVB-T signal and the existence of DVB-T2 signal. In the sub-diagram (A) of FIG. 11, the DVB-T signal detection employed by the sequential channel scan scheme is performed. Considering a case where the selected RF channel delivers the DVB-T signal, confirming that the DVB-T signal exists by the DVB-T signal detection would require a time period TimeAcq_T. Considering another case where the selected RF channel delivers the DVB-T2 signal, confirming that the DVB-T signal does not exist by the DVB-T signal detection would require a time period TimeOut_T. Considering yet another case where the selected RF channel is not used for digital TV signal transmission (i.e., the selected RF channel has no DVB-T/DVB-T2 signal), finding that no signal is present in the selected RF channel by the DVB-T signal detection would require a time period TimeOut_LowPW_T.

In the sub-diagram (B) of FIG. 11, the DVB-T2 signal detection employed by the sequential channel scan scheme is performed. Considering a case where the selected RF channel delivers the DVB-T2 signal, confirming that the DVB-T2 signal exists by the DVB-T2 signal detection would require a time period TimeAcq_T2. Considering another case where the selected RF channel delivers the DVB-T signal, confirming that the DVB-T2 signal does not exist by the DVB-T2 signal detection would require a time period TimeOut_T2. Considering yet another case where the selected RF channel is not used for digital TV signal transmission (i.e., the selected RF channel has no DVB-T/DVB-T2 signal), finding that no signal is present in the selected RF channel by the DVB-T2 signal detection would require a time period TimeOut_LowPW_T2.

In the sub-diagram (C) of FIG. 11, the channel co-scan scheme is configured to check the existence of the DVB-T2 signal and the existence of DVB-T signal concurrently. In other words, one of the DVB-T signal detection and the DVB-T2 signal detection is active while the other of the DVB-T signal detection and the DVB-T2 signal detection is active. Considering a case where the selected RF channel delivers the DVB-T signal, the DVB-T signal would be detected by DVB-T signal detection which is employed by the channel co-scan scheme, and confirming that the DVB-T signal exists by the DVB-T signal detection would require a time period TimeAcq_T. Considering another case where the selected RF channel delivers the DVB-T2 signal, the DVB-T2 signal would be detected by DVB-T2 signal detection which is employed by the channel co-scan scheme, and confirming that the DVB-T2 signal exists by the DVB-T2 signal detection would require a time period TimeAcq_T2. Considering yet another case where the selected RF channel is not used for digital TV signal transmission (i.e., the selected RF channel has no DVB-T/DVB-T2 signal), finding that no signal is present in the selected RF channel by the channel co-scan scheme would require a time period equal to a maximum selected from the time periods TimeOut_LowPW_T2 and TimeOut_LowPW_T.

As can be readily seen from FIG. 11, when each of the scanned RF channel delivers either the DVB-T signal or the DVB-T2 signal, the channel scan time would be significantly reduced by the use of the channel co-scan scheme due to the fact that there is neitherTimeOut_T norTimeOut_T2 included in the channel scan time. Suppose that there are six RF channels CH₀, CH₁, CH₂, CH₃, CH₄, and CH₅ to be sequentially scanned, where the RF channels CH₀, CH₂, and CH₄ are used to deliver DVB-T signals, and the RF channels CH₁, CH₃, and CH₅ are used to deliver DVB-T2 signals. Regarding the sequential channel scan scheme that is configured to check the existence of the DVB-T signal and the existence of DVB-T2 signal in order, it would have to scan all RF channels for detecting the DVB-T signal and then scan RF channels having no DVB-T signal detected therein for detecting the DVB-T2 signal. Thus, the DVB-T scan time would be 3*(TimeAcq_T+TimeOut_T), and the DVB-T2 scan time would be 3*TimeAcq_T2. As a result, the total scan time would be 3*TimeAcq_T+3*TimeAcq_T2+3*TimeOut_T. In a worst case where all of the RF channels CH₀-CH₅ deploy DVB-T2 signals, the total scan time would be 6*TimeAcq_T2+6*TimeOut_T.

Regarding another sequential channel scan scheme that is configured to check the existence of the DVB-T2 signal and the existence of DVB-T signal in order, it would have to scan all RF channels for detecting the DVB-T2 signal and then scan RF channels having no DVB-T2 signal detected therein for detecting the DVB-T signal. Thus, when the RF channels CH₀, CH₂, and CH₄ are used to deliver DVB-T signals and the RF channels CH₁, CH₃, and CH₅ are used to deliver DVB-T2 signals, the DVB-T2 scan time would be 3*(TimeAcq_T2+TimeOut_T2), and the DVB-T scan time would be 3*TimeAcq_T. As a result, the total scan time would be 3*TimeAcq_T2+3*TimeAcq_T+3*TimeOut_T2. In a worst case where all of the RF channels CH₀-CH₅ deploy DVB-T signals, the total scan time would be 6*TimeAcq_T+6*TimeOut_T2.

Compared to above-mentioned sequential channel scan schemes, the proposed channel co-scan scheme of the present invention has shorter scan time and thus better channel scan performance. More specifically, regarding the channel co-scan scheme, the total scan time would be 3*TimeAcq_T+3*TimeAcq_T2, which is shorter than any scan time required by the sequential channel scan schemes.

Moreover, consider a test environment having a test signal generated by combining a DVB-T signal and a DVB-T2 signal, where the DVB-T signal contains data symbols only, and the DVB-T2 signal contains P1 symbols, data symbols, etc. Therefore, the test signal may transmit a combined OFDM symbol consisted of a DVB-T data symbol and a DVB-T2 P1 symbol, a combined OFDM symbol consisted of a DVB-T data symbol and a DVB-T2 data symbol, and an OFDM symbol only including a DVB-T data symbol if the FEF (Future Extension Frame) portion of the DVB-T2 signal contains no signal. When processing such a test signal, a television system employing the channel co-scan scheme will lock on the DVB-T mode or the DVB-T2 mode. However, when processing such a test signal, a television system employing the sequential channel scan scheme will always lock on the DVB-T mode if the DVB-T signal is scanned first, and will always lock on the DVB-T2 mode if the DVB-T2 signal is scanned first.

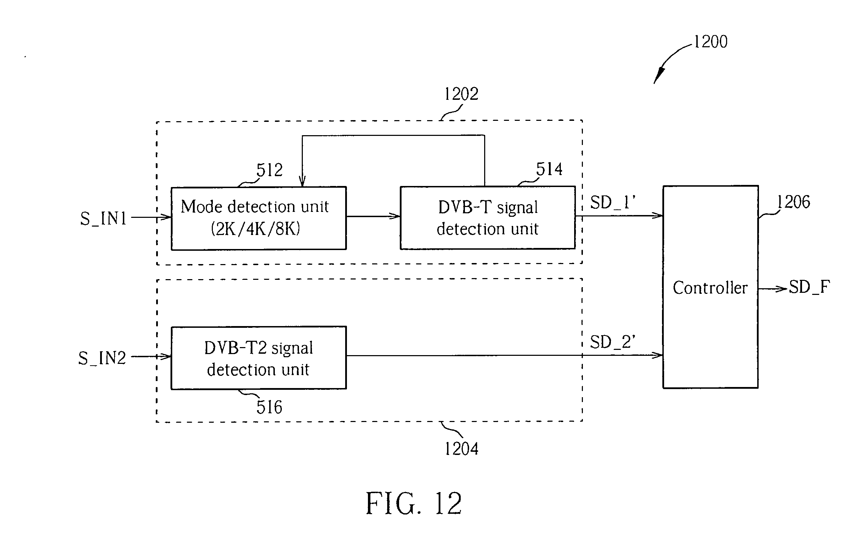

Please refer to FIG. 12, which is a diagram illustrating one exemplary implementation of the channel scan apparatus 300 shown in FIG. 3. The exemplary channel scan apparatus 1200 is based on the architecture shown in FIG. 3, and therefore includes a first acquisition circuit 1 202 used to realize the first acquisition circuit 302, a second acquisition circuit 1 204 used to realize the second acquisition circuit 304, and a controller 1206 used to realize the controller 306. The channel scan apparatus 1 200 is similar to the channel scan apparatus 500, and the major difference therebetween is that the mode detection unit 512 included in the first acquisition circuit 1202 and the DVB-T2 signal detection unit 516 included in the second acquisition circuit 1204 receives first input signal S_IN1 and second input signal S_IN2, respectively, where the first input signal S_IN1 and second input signal S_IN2 are derived from selected RF channels set by different RF frequencies. As a person skilled in the art can readily understand details of the mode detection unit 51 2, the DVB-T signal detection unit 514, and the DVB-T2 signal detection unit 516 after reading above paragraphs, further description is omitted here for brevity.

All combinations and sub-combinations of the above-described features also belong to the invention.

## Claims

1. A channel scan apparatus (100, 300, 500, 1200), **characterized by**:
a first acquisition circuit (102, 302, 502, 1202), arranged for checking, during a first time period, whether a selected radio frequency channel has a television signal complying with a first television standard;
a second acquisition circuit (104, 304, 504, 1204), arranged for checking, during a second time period overlapping the first time period, whether a selected radio frequency channel has a television signal complying with a second television standard different from the first television standard; and
a controller (106, 306, 506, 1206), arranged for controlling the first acquisition circuit (102, 302, 502, 1202) and the second acquisition circuit (104, 304, 504, 1204) to scan a plurality of radio frequency channels.

2. The channel scan apparatus (100, 500) of claim 1, **characterized in that** the selected radio frequency channel checked by the first acquisition circuit (102, 502) is identical to the selected radio frequency channel checked by the second acquisition circuit (104, 504).

3. The channel scan apparatus (300, 1 200) of claim 1, **characterized in that** the selected radio frequency channel checked by the first acquisition circuit (302, 1202) is different from the selected radio frequency channel checked by the second acquisition circuit (304, 1 204).

4. The channel scan apparatus (100, 300, 500, 1200) of claim 1, **characterized in that** each of the first television standard and the second television standard is a digital television standard.

5. The channel scan apparatus (100, 300, 500, 1 200) of claim 4, **characterized in that** the first television standard is a DVB-T standard, and the second television standard is a DVB-T2 standard.

6. The channel scan apparatus (500, 1 200) of claim 5, **characterized in that** the first acquisition circuit (502, 1202) comprises:
a mode detection unit (512), arranged for detecting if an input signal of the selected radio frequency channel checked by the first acquisition circuit (502, 1 202) uses a 2K/4K/8K mode; and
a DVB-T signal detection unit (514), arranged for checking continual pilots of a plurality of symbols transmitted by the input signal when the mode detection unit (512) indicates that the input signal uses the 2K/4K/8K mode, and accordingly determining if the selected radio frequency channel checked by the first acquisition circuit (502, 1202) has the television signal complying with the DVB-T standard.

7. The channel scan apparatus (500, 1 200) of claim 5, **characterized in that** the second acquisition circuit (504, 1 204) comprises a DVB-T2 signal detection unit (516) arranged for checking a P1 symbol to determine if the selected radio frequency channel checked by the second acquisition circuit (504, 1204) has the television signal complying with the DVB-T2 standard.

8. A channel scan method, **characterized by**:
during a first time period, performing a first acquisition operation to check whether a selected radio frequency channel has a television signal complying with a first television standard;
during a second time period overlapping the first time period, performing a second acquisition operation to check whether a selected radio frequency channel has a television signal complying with a second television standard different from the first television standard; and
controlling the first acquisition operation and the second acquisition operation to scan a plurality of radio frequency channels.

9. The channel scan method of claim 8, **characterized in that** the selected radio frequency channel checked by the first acquisition operation is identical to the selected radio frequency channel checked by the second acquisition operation.

10. The channel scan method of claim 8, **characterized in that** the selected radio frequency channel checked by the first acquisition operation is different from the selected radio frequency channel checked by the second acquisition operation.

11. The channel scan method of claim 8, **characterized in that** each of the first television standard and the second television standard is a digital television standard.

12. The channel scan method of claim 11, **characterized in that** the first television standard is a DVB-T standard, and the second television standard is a DVB-T2 standard.

13. The channel scan method of claim 12, **characterized in that** the step of performing the first acquisition operation comprises:
detecting if an input signal of the selected radio frequency channel checked by the first acquisition operation uses a 2K/4K/8K mode; and
checking continual pilots of a plurality of symbols transmitted by the input signal when it is detected that the input signal uses the 2K/4K/8K mode, and accordingly determining if the selected radio frequency channel checked by the first acquisition operation has the television signal complying with the DVB-T standard.

14. The channel scan method of claim 1 2, **characterized in that** the step of performing the second acquisition operation comprises:
checking a P1 symbol to determine if the selected radio frequency channel checked by the second acquisition circuit has the television signal complying with the DVB-T2 standard.
